(19) **Europäisches Patentamt**
**European Patent Office**
**Office européen des brevets**

(11) **EP 2 265 547 B1**

(12) **FASCICULE DE BREVET EUROPEEN**

(45) Date de publication et mention
de la délivrance du brevet:
**07.05.2014 Bulletin 2014/19**

(21) Numéro de dépôt: **09718612.6**

(22) Date de dépôt: **05.03.2009**

(51) Int Cl.:
***C01B 33/037*** (2006.01)   ***C22B 9/22*** (2006.01)

(86) Numéro de dépôt international:
**PCT/EP2009/052627**

(87) Numéro de publication internationale:
**WO 2009/112428 (17.09.2009 Gazette 2009/38)**

(54) **PROCEDE DE PURIFICATION DE SILICIUM POUR APPLICATIONS PHOTOVOLTAIQUES**

VERFAHREN ZUR REINIGUNG VON SILICIUM FÜR PHOTOVOLTAIKANWENDUNGEN

METHOD FOR PURIFYING SILICON FOR PHOTOVOLTAIC APPLICATIONS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.03.2008 FR 0851692**

(43) Date de publication de la demande:
**29.12.2010 Bulletin 2010/52**

(73) Titulaires:
• **Centre National de la Recherche Scientifique (CNRS)**
  **75016 Paris (FR)**
• **Institut Polytechnique de Grenoble**
  **38000 Grenoble (FR)**

(72) Inventeurs:
• **TRASSY, Christian**
  **F-38100 Grenoble (FR)**
• **DELANNOY, Yves**
  **F-38100 Crolles (FR)**

(74) Mandataire: **Regimbeau**
  **20, rue de Chazelles**
  **75847 Paris Cedex 17 (FR)**

(56) Documents cités:
**EP-A- 0 459 421   EP-A- 0 477 784**
**EP-B- 1 042 224   JP-A- 4 338 108**
**JP-A- 10 273 374   JP-A- 11 209 195**

• **ALEMANY C ET AL: "Refining of metallurgical-grade silicon by inductive plasma" SOLAR ENERGY MATERIALS AND SOLAR CELLS, ELSEVIER SCIENCE PUBLISHERS, AMSTERDAM, NL, vol. 72, no. 1-4, 1 avril 2002 (2002-04-01), pages 41-48, XP004339748 ISSN: 0927-0248**

**Description**

**DOMAINE DE L'INVENTION**

La présente invention concerne un procédé de purification de silicium pour des applications photovoltaïques.

**ARRIERE PLAN DE L'INVENTION**

Les applications photovoltaïques - cellules solaires photovoltaïques - nécessitent un silicium de très grande pureté, désigné par l'expression «SoG-silicium » (acronyme du terme anglo-saxon « Solar Grade »). Typiquement, la teneur en impuretés doit être de l'ordre de $10^{-6}$ à $10^{-5}$, c'est-à-dire de l'ordre de 1 à 10 ppm. Il s'agit là d'une teneur moyenne, tous les éléments inclus dans le silicium n'ayant pas tous la même nocivité. Par exemple, la teneur en tungstène (W) doit être inférieure à 0,01 ppm, celle en phosphore (P) inférieure à 5 ppm et la teneur en bore (B) inférieure à 1 ppm.

Pour obtenir du silicium de cette qualité, il est connu d'utiliser des rebuts de silicium de qualité électronique.

Toutefois, la demande industrielle en silicium de qualité photovoltaïque est devenue tellement élevée que ces rebuts sont en quantité insuffisante pour répondre à la demande du marché ; cette pénurie se traduit notamment par une forte hausse des prix du silicium de qualité photovoltaïque.

Il existe par ailleurs un procédé métallurgique consistant à gazéifier le silicium, à en effectuer une distillation de manière à former du chloro-silane qui doit être ensuite converti en silane ($SiH_4$), puis subir un crackage, permettant ainsi d'obtenir une poudre de silicium.

Toutefois, ce procédé se caractérise par un grand nombre d'opérations, et l'émission de chlore lors de la conversion du chloro-silane en silane. En outre, la qualité du silicium métallurgique est inférieure à la qualité requise pour les applications photovoltaïques.

Des procédés ont donc été développés, qui consistent à soumettre du silicium liquide au flux d'une torche à plasma dans lequel sont ajoutés des gaz réactifs susceptibles de provoquer la volatilisation des impuretés.

La réaction se produit à l'interface liquide-plasma et nécessite le renouvellement rapide des gaz et du liquide à cette interface.

Ce renouvellement est obtenu au moyen d'un brassage électromagnétique ou d'un brassage par injection de gaz dans le silicium liquide.

Toutefois, il s'agit d'un procédé discontinu, dit traitement par « batch ». Le silicium est en effet contenu dans un creuset. La durée du traitement dépend directement de la surface libre et du volume du creuset.

Pour parvenir à un procédé quasi-continu, le document JP11-209195 propose la mise en cascade de plusieurs creusets de silicium. Chacun de ces creusets est équipé de canons à électrons dont la fonction est d'assurer le chauffage du silicium et l'évaporation du phosphore.

Cette solution n'est toutefois pas optimale car si le silicium n'est pas renouvelé en surface, l'efficacité (i.e. la vitesse de purification) diminue rapidement, et tout brassage provoque, à l'intérieur d'un même creuset, le mélange entre le silicium non purifié et le silicium purifié.

La multiplication du nombre de creusets permet de réduire cette difficulté mais rend le procédé complexe. Elle nécessite en particulier des opérations de manutention nombreuses et coûteuses. Elle multiplie par ailleurs les sources, canons à électrons ou torches à plasma.

L'un des buts de l'invention est donc de proposer un procédé de purification de silicium qui permette de supprimer la majorité des opérations de manutention. Un autre but de l'invention est de garantir l'absence de contamination du silicium purifié par le silicium non purifié.

**BREVE DESCRIPTION DE L'INVENTION**

Conformément à l'invention, il est proposé un procédé de purification de silicium par exposition de silicium liquide à un plasma, ledit procédé étant caractérisé en ce que le silicium s'écoule de manière continue dans un canal de telle sorte que sa surface libre soit exposée au plasma.

Le débit Q de silicium, la longueur L et la largeur l du canal sont liés à la variation de concentration C d'impureté par la relation :

$$\frac{C}{C_0} = \exp\left(-\frac{1}{k}\frac{lL}{Q}\right)$$

où $C_0$ est la concentration initiale de l'impureté et k est la constante de temps de purification.

Selon un premier mode de réalisation de l'invention, une pluralité de torches à plasma générant des jets de plasma sont disposées en regard de la surface libre du silicium.

De manière préférée, lesdites torches sont disposées en quinconce au-dessus du canal de telle sorte que les jets de plasma couvrent la largeur du canal.

On peut effectuer, dans la partie amont du canal, un traitement oxydant du silicium, et, dans sa partie aval, une désoxygénation du silicium. Ledit traitement oxydant comprend l'injection, dans le plasma, d'oxygène et d'hydrogène ou de vapeur d'eau, ou d'un mélange de ces gaz. La désoxygénation comprend l'exposition à un plasma argon ou argon-hydrogène.

Selon un autre mode de réalisation de l'invention, le canal est agencé dans une cuve circulaire pourvue de chicanes.

Dans ce cas, ladite cuve est exposée au plasma généré par une torche, de telle sorte que le plasma généré par cette torche couvre une surface dont le diamètre est supérieur ou égal à celui de la cuve.

De manière particulièrement avantageuse, on contrôle le débit de silicium en entrée et/ou en sortie du canal.

Un autre objet concerne un dispositif de purification de silicium, comprenant :

- un moyen d'alimentation en silicium liquide,
- un canal pour l'écoulement du silicium,
- des moyens de génération de plasma,

dans lequel le canal et les moyens de génération du plasma sont agencés de telle sorte que la surface libre du silicium s'écoulant dans le canal soit exposée au plasma.

Le dispositif comprend avantageusement des moyens de contrôle du débit de silicium en entrée et/ou en sortie du canal.

Le débit Q de silicium, la longueur L et la largeur l du canal sont liés à la variation de concentration C d'impureté par la relation :

$$\frac{C}{C_0} = \exp\left(-\frac{1}{k}\frac{lL}{Q}\right)$$

où $C_0$ est la concentration initiale de l'impureté et k est la constante de temps de purification.

Selon un premier mode de réalisation du dispositif, le plasma est généré par une pluralité de torches disposées en quinconce au-dessus du canal.

De préférence, les torches situées dans la partie amont du canal comprennent des moyens d'injection, dans le plasma, d'un gaz oxydant et la torche la plus en aval comprend des moyens d'injection, dans le plasma, d'un gaz désoxygénant.

Selon un autre mode de réalisation possible du dispositif, le canal est agencé à l'intérieur d'une cuve circulaire au moyen de chicanes, et le plasma est généré par une torche dont le diamètre de flux est supérieur ou égal à celui de la cuve.

Selon une variante, le canal est agencé à l'intérieur de plusieurs cuves circulaires successives pourvues de chicanes.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une vue générale du dispositif conforme à l'invention,
- la figure 2 illustre un premier mode de réalisation de l'invention,
- la figure 3 illustre un deuxième mode de réalisation de l'invention,

- la figure 4 présente deux coupes longitudinales du canal avec deux modes de réalisation possible du fond,
- la figure 5 est un graphe comparant les performances de différents procédés.

**DESCRIPTION DETAILLEE DE L'INVENTION**

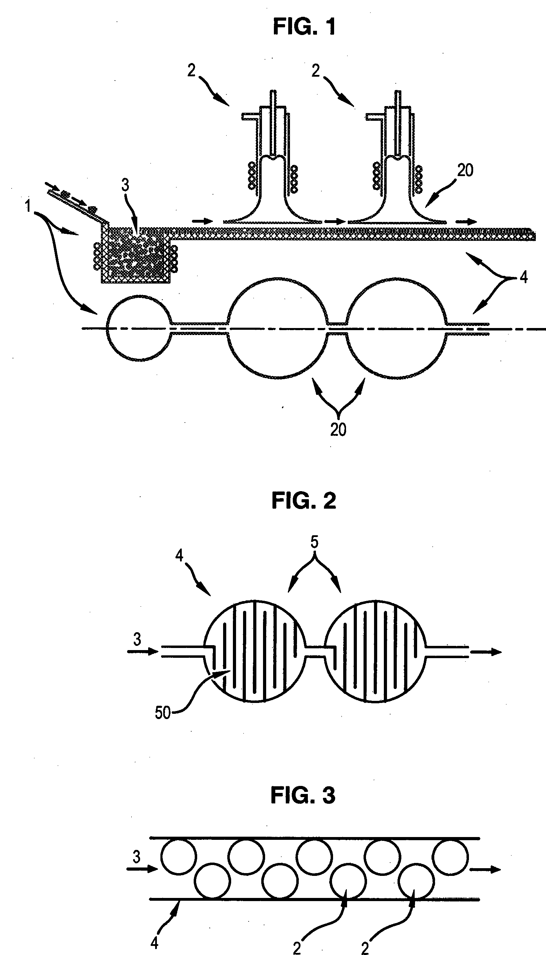

En référence à la figure 1, le dispositif conforme à l'invention comprend un dispositif 1 de fusion du silicium 3, un canal 4, des moyens 2 de génération de plasma, un moule pour la solidification du silicium (non représenté).

Dispositif de fusion du silicium

Le dispositif comprend en premier lieu un dispositif 1 de fusion permettant de faire fondre le silicium solide. Ce dispositif de fusion est connu en soi et ne fera donc pas l'objet d'une description détaillée.

Il comprend un creuset réfractaire, par exemple en silice ou en carbone, à l'intérieur duquel les blocs de silicium sont fondus par chauffage électrique direct ou par induction. L'induction présente l'avantage de procurer un brassage qui améliore le transfert de chaleur.

Le creuset est alimenté en continu en blocs de silicium de façon à maintenir un niveau de liquide constant à l'intérieur du creuset.

Le silicium introduit à l'entrée est du silicium métallurgique (MG-Si) ou du silicium métallurgique amélioré (UMG-Si), à faible teneur en impuretés métalliques

Moyens de génération de plasma

On utilise, pour générer le plasma, une ou plusieurs torches à plasma 2 de type connu.

Ces torches génèrent de préférence un plasma argon (Ar), auquel on ajoute un ou des gaz dont les propriétés réactives permettent la purification du silicium en réagissant avec le ou les éléments que l'on souhaite éliminer du silicium. Le plasma argon a pour fonction de créer et de maintenir l'ionisation des gaz réactifs introduits.

La torche à plasma 2, de géométrie de révolution, génère un jet de plasma 20 de forme sensiblement cylindrique, qui s'étale lorsqu'il rencontre la surface de silicium 3, comme cela est représenté à la figure 1.

Par exemple, les torches à plasma habituellement disponibles dans le commerce dispensent un jet de plasma de 40 à 50 mm de diamètre, qui permet de couvrir une surface de silicium de l'ordre de 200 mm de diamètre. L'homme du métier adapte donc le nombre et la disposition des torches à plasma en fonction de la surface à couvrir.

Réactions de purification

Le cycle de purification du silicium comprend typiquement aux moins deux phases.

La première phase consiste en un traitement oxydant permettant d'éliminer les impuretés telles que le bore et le carbone, selon les réactions suivantes :

$$B + OH \rightarrow BOH\uparrow \text{ ou } B + O + H \rightarrow BOH\uparrow$$

$$C + O \rightarrow CO\uparrow$$

La flèche verticale indique que les composés formés sont volatiles.

Les espèces introduites O, H et/ou OH sont créées à haute température par injection, dans le plasma d'argon, d'oxygène et d'hydrogène ou de vapeur d'eau, ou d'un mélange de ces gaz.

Cette première phase de traitement se traduit donc par la dissolution dans le silicium d'oxygène et d'hydrogène. Toutefois, l'oxygène étant gênant pour les propriétés photovoltaïques du silicium, il doit ensuite être éliminé.

A cet effet, la deuxième phase du traitement est une désoxygénation sous l'effet d'un plasma argon ou argon-hydrogène, favorisant la réaction suivante :

$$Si + O \rightarrow SiO\uparrow \text{ ou } SiO_2 + Si \rightarrow 2\,SiO\uparrow$$

Dans la purification par plasma, la réaction entre les espèces réactives créées par le plasma et le silicium se produit à l'interface plasma-silicium.

Il est donc nécessaire de renouveler rapidement les phases liquides et gazeuses au voisinage de cette interface, sous peine de ralentir fortement la réaction.

Le renouvellement de la phase gazeuse est rapide du fait de la vitesse des gaz du plasma, qui est de l'ordre de plusieurs dizaines de mètres par seconde.

En ce qui concerne la phase liquide, le renouvellement est effectué, dans les procédés « par batch », par un brassage électromagnétique (décrit par exemple dans le document FR 2772741) ou par l'effet mécanique d'un jet de plasma à très haute vitesse (on pourra à cet égard se référer à la publication de N. Yuge, H. Baba, Y. Sakaguchi, K. Nishikawa, H. Terashima, F. Aratami, « Purification of metalurgical silicon up to solar grade », Solar Energy Materials and Solar Cells 34 (1994) 243-250).

Ce brassage est d'autant plus nécessaire que la cuve est profonde et que la diffusion des impuretés du coeur du liquide vers la surface est longue.

Pour réduire l'effet de la diffusion, il faut diminuer l'épaisseur du volume liquide ; par contre, pour avoir une durée d'exposition au plasma suffisante, il est nécessaire d'augmenter la distance parcourue par le liquide, et donc le temps de séjour sous la torche à plasma.

Un procédé de purification continu mis en oeuvre dans une cuve profonde présente peu d'intérêt en raison de la nécessité du brassage. En effet, le brassage aura pour effet de mélanger le silicium pollué entrant dans la cuve avec le silicium qui aura déjà été traité par le plasma.

En revanche, l'invention propose un procédé continu dans lequel le silicium à purifier défile sous le plasma de traitement sans qu'il lui soit possible de se mélanger. Ceci implique que les échanges dans l'épaisseur de la couche de silicium soient rapides devant le temps de séjour sous le plasma, c'est-à-dire que l'épaisseur de silicium soit très faible.

La vitesse de volatilisation des impuretés dépend en première approximation de la concentration dans la phase liquide et de la surface de réaction :

$$m_{volatilisée} = k.A.C_x$$

où :

- $m_{volatilisée}$ est la masse d'impureté retirée du liquide par unité de temps,
- $A$ est la surface de contact entre le plasma et le silicium liquide, dite « surface active » de la cuve,
- $C_x$ est la concentration de l'impureté x dans le silicium,
- $k$ est la constante de réaction, fonction des conditions opératoires : température du silicium, puissance plasma, débit d'argon, nature des gaz réactifs, concentration des gaz réactifs dans le plasma.

Par ailleurs, la constante de temps de purification, $k$, dépend de l'épaisseur de silicium liquide :

$$dC/C = k.A/V = k/h$$

où:

- $V$ est le volume de silicium,
- $h$ est l'épaisseur du silicium liquide.

Canal de purification

L'une des originalités de l'invention réside dans l'écoulement en continu du silicium liquide dans un canal 4 exposé en tout point - ou sur la majorité de son parcours - au plasma 20. La recherche de l'efficacité maximum conduit à préconiser une exposition totale.

Ce canal est disposé dans une enceinte dont on contrôle l'atmosphère.

Par canal, on entend dans ce texte un conduit, qui peut être de section rectangulaire ou semi-circulaire ou elliptique, muni d'une entrée et d'une sortie de manière à permettre l'écoulement d'un fluide, la profondeur du conduit étant faible devant sa longueur ; on précise qu'en outre la section d'un tel conduit est ouverte dans sa partie supérieure de telle sorte que la surface libre du fluide qui s'y écoule soit accessible par les gaz réactifs et le plasma.

Le dimensionnement du canal est en outre intimement lié au temps d'exposition au plasma. En effet, il est nécessaire de respecter un ratio temps d'exposition / épaisseur de silicium tel que les impuretés aient le temps de diffuser vers la surface pour être volatilisées et éliminées. Ainsi, pour obtenir des résultats satisfaisants, ce ratio, peut être déterminé en utilisant la relation :

$$\frac{C}{C_0} = \exp\left(-\frac{1}{k}\frac{lL}{Q}\right),$$

où $C_0$ est la concentration initiale de l'impureté considérée, $Q$ est le débit de silicium liquide, $l$ la largeur du canal, et $L$ la longueur du canal.

Le temps de séjour requis dépend de la concentration en entrée et de la concentration désirée en sortie ; ce temps de séjour est contrôlé par le débit de silicium liquide en entrée du réacteur.

Pour limiter le mélange entre amont et aval, le ratio longueur / largeur du canal doit être supérieur à 10, sans qu'il y ait de limitation supérieure, et le ratio profondeur / largeur du canal doit être inférieur à 0,3. La limite inférieure est simplement déterminée par la nécessité de maintenir une épaisseur contrôlée de silicium liquide.

Le parcours du canal 4 peut prendre différentes formes. Le canal peut ainsi être rectiligne ou être formée de plusieurs portions rectilignes, mais il peut aussi être agencé à l'intérieur d'une surface donnée - par exemple circulaire - au moyen de chicanes.

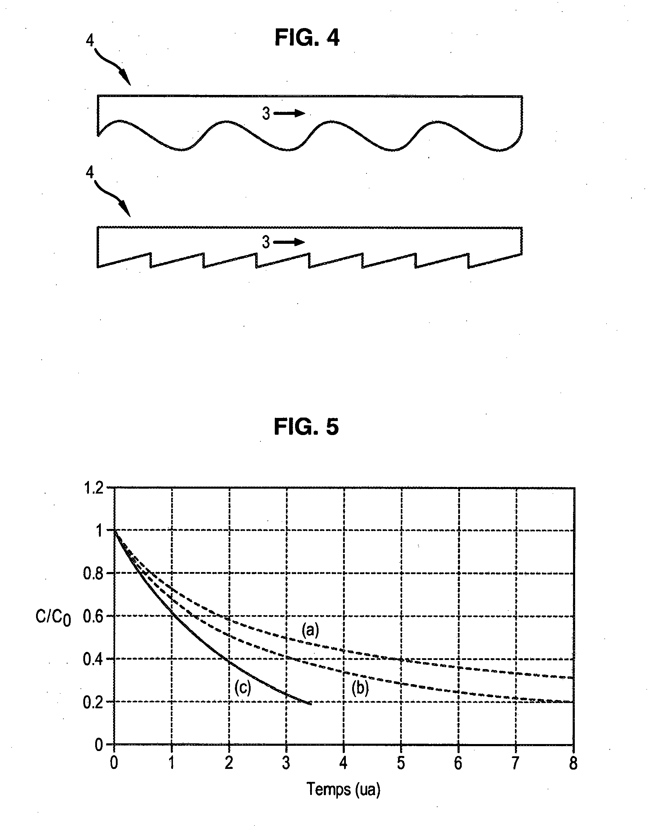

Pour améliorer le brassage, la surface interne du canal peut être rugueuse ou texturée ou de préférence, présenter des ondulations ou un profil en dent de scie dont l'amplitude est au moins égale à la moitié de la hauteur du canal. L'objectif est d'augmenter la turbulence locale pour améliorer le brassage et l'homogénéisation locale du bain de silicium liquide. La figure 4 illustre deux configurations possibles du fond du canal 4, le flux de silicium 3 étant représenté par une flèche.

La température du canal doit être adaptée de telle sorte que le silicium reste liquide - la température de fusion du silicium étant de l'ordre de 1414°C - tout en maintenant cette température en-deçà de 1700°C pour limiter l'évaporation thermique du silicium.

A cet effet, on utilise un canal en graphite, ou en silice, ou en tout autre matériau réfractaire compatible avec le silicium. Ce canal peut être chauffé directement, par exemple par induction, dans le cas du graphite, soit chauffé par l'intermédiaire d'un suscepteur (c'est-à-dire un élément de chauffage indirect couplé avec un dispositif de chauffage par induction) lorsqu'il est en matériau non conducteur. Il est muni de moyens de régulation de la température.

Selon un premier mode de réalisation, illustré à la figure 2, le canal 4 est agencé dans une cuve circulaire 5 de faible profondeur au moyen d'une série de chicanes 50, la surface de la cuve 5 étant telle qu'elle est entièrement exposée au jet de plasma issu d'une unique torche de géométrie circulaire. Le diamètre interne de la torche est compris entre 40 et 160 mm, en fonction de la puissance (de 10 kW à 1 MW).

Le diamètre de la cuve est fonction de la puissance et du diamètre des torches ; il est compris entre 10 cm et 1 m.

Ainsi, on force le silicium à parcourir une distance importante sous le plasma, et donc à séjourner longtemps sous le flux de plasma.

En fonction du temps d'exposition requis et/ou de la puissance des torches à plasma utilisées, on peut éventuellement disposer en série plusieurs cuves 5 comprenant de telles chicanes. La figure 2 illustre ainsi un dispositif avec un canal disposé à l'intérieur de deux cuves circulaires 5 successives. Dans ce cas, la ou les torches à plasma sont de préférence des torches de forte puissance, c'est-à-dire de plus de 10 à 20 kW.

Selon un deuxième mode de réalisation, on dispose au-dessus d'un canal rectiligne une pluralité de torches à plasma de telle sorte que toute la surface libre du silicium soit exposée au plasma. De manière avantageuse, on utilise à cet effet des torches à plasma de faible puissance disposées en quinconce au-dessus du canal, comme illustré en vue de dessus à la figure 3. Sur cette figure, les cercles représentent le diamètre des torches 2, mais on rappelle que la surface couverte par le plasma a un diamètre trois à dix fois supérieur en fonction de la vitesse des gaz issus du plasma. Ainsi, toute la surface libre du silicium est exposée au plasma. Selon ce mode de réalisation, on pourrait tolérer qu'une faible portion de la surface libre ne soit pas exposée au plasma, mais cela se ferait au détriment du rendement du procédé.

De manière particulièrement avantageuse, cette configuration permet d'introduire dans les différentes torches à plasma des gaz différents, de manière à effectuer, pendant l'écoulement du silicium, une pluralité de traitements successifs adaptés à la composition initiale du silicium.

En particulier, on peut avantageusement effectuer le traitement oxydant au moyen des torches à plasma situées au-dessus de la partie amont du canal, et effectuer sous la torche située le plus en aval le traitement de désoxygénation. Ainsi, à l'issue du procédé, le silicium a subi toutes les étapes de traitement nécessaires, tandis que dans un traitement classique « par batch », les deux phases sont enchaînées successivement.

Quel que soit le mode de réalisation mis en oeuvre, le canal permet d'empêcher tout mélange entre le silicium pollué entrant et le silicium purifié sortant, tout en assurant un brassage local au moyen du plasma.

Dimensionnement du canal

Comme on l'a exposé plus haut, le dimensionnement du canal dépend de plusieurs paramètres. Les paramètres principaux sont :

- le taux de purification souhaité, exprimé sous la forme du ratio $C/C_0$, où C est la concentration finale souhaitée de l'impureté et $C_0$ la concentration initiale ;
- la constante de temps de purification k, qui dépend essentiellement de la teneur en gaz réactifs du plasma et de la température de surface du silicium - en particulier, la constante k diminue avec la température du silicium. L'homme de l'art sait mesurer cette grandeur ;
- le temps de séjour du silicium sous le plasma ;
- le débit de silicium liquide.

Concrètement, pour dimensionner le canal, l'homme du métier pourra employer la démarche suivante :

- partant du taux de purification souhaité, il déterminera le temps de séjour nécessaire sous le plasma ;
- prenant en compte le coefficient k, il pourra en déduire la température et la concentration des gaz ;
- il en déduira ensuite le débit de silicium et les dimensions (section, longueur) du canal.

L'épaisseur de silicium liquide dépend par ailleurs du mode de réalisation du procédé de purification. En effet, une épaisseur faible permet de faciliter l'évaporation des impuretés, mais plus cette épaisseur est faible, plus le contrôle thermique est délicat, le silicium s'évaporant plus facilement, engendrant ainsi une baisse de rendement. Les transferts de chaleur entre le silicium et le plasma peuvent être modélisés au moyen de codes de calcul connus de l'homme du métier.

Par exemple, si l'on utilise une torche à plasma de grande dimension ou de forte puissance, on emploiera une épaisseur plus importante de silicium pour éviter les risques de surchauffe.

Moyens de contrôle du débit de silicium

Outre l'épaisseur du silicium liquide dans le canal, un paramètre essentiel du procédé de purification est la durée d'exposition au plasma. En effet, plus l'exposition au plasma est longue, plus élevé est le taux de purification du plasma.

La maîtrise de cette durée d'exposition est effectuée au moyen du contrôle du débit de silicium en entrée et en sortie du canal. On utilise à cet effet des vannes électromagnétiques ou tout autre dispositif permettant un contrôle du débit sans introduire de pollution additionnelle.

Solidification du silicium

Enfin, la sortie du canal débouche dans un creuset dans lequel le silicium purifié est refroidi et cristallise.

Résultats comparatifs

La figure 5 compare les temps de traitement requis pour réduire dans un rapport donné les concentrations d'impuretés avec différents procédés :

- la courbe (a) illustre le résultat obtenu avec un procédé semi-continu « par batch » avec une seule cuve ;
- la courbe (b) illustre le résultat obtenu avec un procédé semi-continu « par batch » avec deux cuves disposées en série ;
- la courbe (c) illustre le résultat obtenu avec le procédé continu conforme à l'invention.

Ces résultats confirment que le procédé conforme à l'invention permet d'obtenir un silicium dont la pureté est du même ordre de grandeur que les procédés « par batch » de l'art antérieur, mais en un temps de traitement nettement réduit.

**Revendications**

1. Procédé de purification de silicium par exposition de silicium liquide (3) à un plasma (20), **caractérisé en ce que** le silicium (3) s'écoule de manière continue dans un canal (4) de telle sorte que sa surface libre soit exposée au plasma (20), le ratio entre le temps d'exposition au plasma et l'épaisseur du silicium dans le canal étant tel que les impuretés aient le temps de diffuser vers la surface pour être volatilisées et éliminées.

2. Procédé selon la revendication 1, **caractérisé en ce que** le débit (Q) de silicium, la longueur (L) et la largeur (I) du canal (4) sont liés à la variation de concentration (C) d'impureté par la relation :

$$\frac{C}{C_0} = \exp\left(-\frac{1}{k}\frac{lL}{Q}\right)$$

où $C_0$ est la concentration initiale de l'impureté et k est la constante de temps de purification.

3. Procédé selon la revendication 1, **caractérisé en ce qu'**une pluralité de torches à plasma (2) générant des jets de plasma (20) sont disposées en regard de la surface libre du silicium (3).

4. Procédé selon la revendication 3, **caractérisé en ce que** les torches (2) sont disposées en quinconce au-dessus du canal (4) de telle sorte que les jets de plasma (20) couvrent la largeur du canal (4).

5. Procédé selon l'une des revendications 1 à 4, **ca-**

**ractérisé en ce que** dans la partie amont du canal on effectue un traitement oxydant du silicium, et **en ce que** dans la partie aval du canal on effectue une désoxygénation du silicium.

6. Procédé selon la revendication 5, **caractérisé en ce que** le traitement oxydant comprend l'injection, dans le plasma (20), d'oxygène et d'hydrogène ou de vapeur d'eau, ou d'un mélange de ces gaz.

7. Procédé selon l'une des revendications 5 ou 6, **caractérisé en ce que** la désoxygénation comprend l'exposition à un plasma (20) argon ou argon-hydrogène.

8. Procédé selon la revendication 1, **caractérisé en ce que** le canal (4) est agencé dans une cuve circulaire (5) pourvue de chicanes (50).

9. Procédé selon la revendication 8, **caractérisé en ce que** la cuve (5) est exposée au plasma (20) généré par une torche (2), ledit plasma couvrant une surface dont le diamètre est supérieur ou égal à celui de ladite cuve.

10. Procédé selon l'une des revendications 1 à 9, **caractérisé en ce que** l'on contrôle le débit de silicium en entrée et/ou en sortie du canal (4).

11. Dispositif de purification de silicium, **caractérisé en ce qu'**il comprend :

    - un moyen (1) d'alimentation en silicium liquide (3)
    - un canal (4) pour l'écoulement du silicium
    - des moyens (2) de génération de plasma (20),

    le canal (4) et les moyens (2) de génération du plasma étant agencés de telle sorte que la surface libre du silicium (3) s'écoulant dans le canal (4) soit exposée au plasma (20).

12. Dispositif selon la revendication 11, **caractérisé en ce qu'**il comprend dès moyens de contrôle du débit de silicium en entrée et/ou en sortie du canal (4).

13. Dispositif selon l'une des revendications 11 à 12, **caractérisé en ce que** le plasma est généré par une pluralité de torches disposées en quinconce au-dessus du canal.

14. Dispositif selon la revendication 13 **caractérisé en ce que** les torches (2) situées dans la partie amont du canal (4) comprennent des moyens d'injection, dans le plasma (20) d'un gaz oxydant et **en ce que** la torche la plus en aval comprend des moyens d'injection, dans le plasma, d'un gaz désoxygénant.

15. Dispositif selon l'une des revendications 11 à 12, **caractérisé en ce que** le canal (4) est agencé à l'intérieur d'une cuve circulaire (5) au moyen de chicanes (50), et **en ce que** le plasma (20) est généré par une torche (2) dont le diamètre de flux est supérieur ou égal à celui de la cuve.

16. Dispositif selon la revendication 15, **caractérisé en ce que** le canal (4) est agencé à l'intérieur de plusieurs cuves circulaires (5) successives pourvues de chicanes (50).

**Patentansprüche**

1. Verfahren zur Reinigung von Silicium durch Exposition von flüssigem Silicium (3) gegenüber einem Plasma (20), **dadurch gekennzeichnet, dass** das Silicium (3) auf kontinuierliche Weise in einem Kanal (4) derart fließt, dass seine freie Oberfläche gegenüber dem Plasma (20) exponiert wird, wobei das Verhältnis zwischen der Expositionszeit gegenüber dem Plasma und der Dicke des Siliciums in dem Kanal derart ist, dass die Verunreinigungen die Zeit haben, in Richtung der Oberfläche zu diffundieren, um verflüchtigt und entfernt zu werden.

2. Verfahren nach Anspruch 1, **dadurch gekennzeichnet, dass** der Mengenfluss (Q) von Silicium, die Länge (L) und die Breite (I) des Kanals (4) mit der Veränderung der Konzentration (C) einer Verunreinigung verknüpft sind durch die Beziehung:

$$\frac{C}{C_0} = \exp\left(-\frac{1}{k}\frac{IL}{Q}\right),$$

worin $C_0$ die Anfangskonzentration der Verunreinigung ist und k die Reinigungszeitkonstante ist.

3. Verfahren nach Anspruch 1, **dadurch gekennzeichnet, dass** eine Mehrzahl von Plasmabrennern (2), die Plasmastrahlen (20) erzeugen, in Bezug auf die freie Oberfläche des Siliciums (3) angeordnet sind.

4. Verfahren nach Anspruch 3, **dadurch gekennzeichnet, dass** die Brenner (2) in Fünfpunktanordnung oberhalb des Kanals (4) derart angeordnet sind, dass die Plasmastrahlen (20) die Breite des Kanals (4) abdecken.

5. Verfahren nach einem der Ansprüche 1 bis 4, **dadurch gekennzeichnet, dass** man in dem stromaufwärts gelegenen Abschnitt des Kanals eine oxidierende Behandlung des Siliciums ausführt und dass man in dem stromabwärts gelegenen Abschnitt des Kanals eine Desoxygenierung des Siliciums ausführt.

6. Verfahren nach Anspruch 5, **dadurch gekennzeichnet, dass** die oxidierende Behandlung die Injektion von Sauerstoff und Wasserstoff oder von Wasserdampf oder einer Mischung von diesen Gasen in das Plasma (20) umfasst.

7. Verfahren nach einem der Ansprüche 5 oder 6, **dadurch gekennzeichnet, dass** die Desoxygenierung die Exposition gegenüber einem Argon- oder Argon-Wasserstoff-Plasma (20) umfasst.

8. Verfahren nach Anspruch 1, **dadurch gekennzeichnet, dass** der Kanal (4) in einer kreisförmigen Wanne (5), die mit Schikanen bzw. Ablenkelementen (50) ausgestattet ist, gestaltet ist.

9. Verfahren nach Anspruch 8, **dadurch gekennzeichnet, dass** die Wanne (5) gegenüber dem durch einen Brenner (2) erzeugten Plasma (20) exponiert wird, wobei das Plasma eine Oberfläche abdeckt, deren Durchmesser größer als oder gleich jenem der Wanne ist.

10. Verfahren nach einem der Ansprüche 1 bis 9, **dadurch gekennzeichnet, dass** man den Mengenfluss von Silicium beim Eintritt in und/oder beim Austritt aus dem Kanal (4) kontrolliert.

11. Vorrichtung zur Reinigung von Silicium, **dadurch gekennzeichnet, dass** sie umfasst:

   - ein Mittel (1) zum Zuführen von flüssigem Silicium (3),
   - einen Kanal (4) für das Fließen des Siliciums,
   - Mittel (2) zur Erzeugung von Plasma (20),

   wobei der Kanal (4) und die Mittel (2) zur Erzeugung des Plasmas derart gestaltet sind, dass die freie Oberfläche des Siliciums (3), das in dem Kanal (4) fließt, gegenüber dem Plasma (20) exponiert wird.

12. Vorrichtung nach Anspruch 11, **dadurch gekennzeichnet, dass** sie Mittel zur Kontrolle des Mengenflusses von Silicium beim Eintritt in und/oder beim Austritt aus dem Kanal (4) umfasst.

13. Vorrichtung nach einem der Ansprüche 11 bis 12, **dadurch gekennzeichnet, dass** das Plasma durch eine Mehrzahl von Brennern, die in Fünfpunktanordnung oberhalb des Kanals angeordnet sind, erzeugt wird.

14. Vorrichtung nach Anspruch 13, **dadurch gekenn-**

**zeichnet, dass** die in dem stromaufwärts gelegenen Abschnitt des Kanals (4) befindlichen Brenner (2) Mittel zum Injizieren eines oxidierenden Gases in das Plasma (20) umfassen und dass der am weitesten stromabwärts befindliche Brenner Mittel zum Injizieren eines desoxygenierenden Gases in das Plasma umfasst.

15. Vorrichtung nach einem der Ansprüche 11 bis 12, **dadurch gekennzeichnet, dass** der Kanal (4) im Inneren einer kreisförmigen Wanne (5) mittels Schikanen bzw. Ablenkelementen (50) gestaltet ist und dass das Plasma (20) durch einen Brenner (2) erzeugt wird, dessen Stromdurchmesser größer als oder gleich jenem der Wanne ist.

16. Vorrichtung nach Anspruch 15, **dadurch gekennzeichnet, dass** der Kanal (4) im Inneren von mehreren aufeinanderfolgenden kreisförmigen Wannen (5), die mit Schikanen bzw. Ablenkelementen (50) ausgestattet sind, gestaltet ist.

**Claims**

1. A method for purifying silicon by exposing liquid silicon (3) to a plasma (20), **characterized in that** the silicon (3) continuously flows in a channel (4) so that its free surface is exposed to the plasma (20), the ratio between the exposure time to the plasma and the thickness of the silicon in the channel being such that the impurities have time for diffusing towards the surface in order to be volatilized and removed.

2. The method according to claim 1, **characterized in that** the flow rate (Q) of silicon, the length (L) and the width (1) of the channel (4) are related to the impurity concentration variation (C) through the relationship:

$$\frac{C}{C_0} = \exp\left(-\frac{1}{k}\frac{lL}{Q}\right)$$

wherein $C_0$ is the initial concentration of the impurity and k is the purification time constant.

3. The method according to claim 1, **characterized in that** a plurality of plasma torches (2) generating plasma jets (20) are positioned facing the free surface of the silicon (3).

4. The method according to claim 3, **characterized in that** the torches (2) are staggered above the channel (4) so that the plasma jets (20) cover the width of the channel (4).

**5.** The method according to any of claims 1 to 4, **characterized in that** in the upstream portion of the channel, an oxidizing treatment of silicon is carried out and **in that** in the downstream portion of the channel, deoxygenation of the silicon is carried out.

**6.** The method according to claim 5, **characterized in that** the oxidizing treatment comprises the injection of oxygen and hydrogen or steam, or a mixture of these gases into the plasma (20).

**7.** The method according to any of claims 5 or 6, **characterized in that** deoxygenation comprises exposure to an argon or argon-hydrogen plasma (20).

**8.** The method according to claim 1, **characterized in that** the channel (4) is arranged in a circular tank (5) provided with baffles (50).

**9.** The method according to claim 8, **characterized in that** the tank (5) is exposed to the plasma (20) generated by a torch (2), said plasma covering a surface for which the diameter is larger than or equal to that of said tank.

**10.** The method according to any of claims 1 to 9, **characterized in that** the silicon flow rate is controlled at the inlet and/or at the outlet of the channel (4).

**11.** A silicon purification device, **characterized in that** it comprises:

- a means (1) for supplying liquid silicon (3),
- a channel (4) for the flow of the silicon,
- means (2) for generating a plasma (20),

the channel (4) and the plasma generating means (2) being arranged in such as way that the free surface of the silicon (3) flowing in the channel (4) is exposed to the plasma.

**12.** The device according to claim 11, **characterized in that** it comprises means for controlling the silicon flow rate at the inlet and/or at the outlet of the channel (4).

**13.** The device according to any of claims 11 to 12, **characterized in that** the plasma is generated by a plurality of torches staggered above the channel.

**14.** The device according to claim 13, **characterized in that** the torches (2) located in the upstream portion of the channel (4) comprise means for injecting an oxidizing gas into the plasma (20) and **in that** the most downstream torch comprises means for injecting a deoxygenating gas into the plasma.

**15.** The device according to any of claims 11 to 12, **characterized in that** the channel (4) is arranged inside a circular tank (5) by means of baffles (50) and **in that** the plasma (20) is generated by a torch (2), the flux diameter of which is larger than or equal to that of the tank.

**16.** The device according to claim 15, **characterized in that** the channel (4) is arranged inside several successive circular tanks (5) provided with baffles (50).

# FIG. 1

# FIG. 2

# FIG. 3

# FIG. 4

# FIG. 5

## RÉFÉRENCES CITÉES DANS LA DESCRIPTION

**Documents brevets cités dans la description**

- JP 11209195 A

- FR 2772741

**Littérature non-brevet citée dans la description**

- **N. YUGE ; H. BABA ; Y. SAKAGUCHI ; K. NISHIKAWA ; H. TERASHIMA ; F. ARATAMI.** Purification of metalurgical silicon up to solar grade. *Solar Energy Materials and Solar Cells,* 1994, vol. 34, 243-250